# EUROPEAN PATENT SPECIFICATION

(11) **EP 0 821 009 B1**
(45) Date of publication and mention of the grant of the patent: **10.05.2000**
(21) Application number: 97305560.1
(22) Date of filing: 24.07.1997
(51) Int. Cl.: C08F 4/602, C08F 10/00

(54) **A catalyst system having a metallocene linked to a carrier by an anchored chain**
Katalysatorsystem mit einem Metallocen der durch eine verankerte Kette an einen Träger gebunden ist
Système catalytique comportant un métallocène lié à un support par une chaîne ancrée

(30) Priority: 26.07.1996 KR 9631698
(43) Date of publication of application: 28.01.1998
(73) Proprietor: DAELIM INDUSTRIAL CO., LTD., Chung-gu, Seoul 100-130 (KR); Lee, Dong Ho, Soosung-Gu, Taegu (KR)
(72) Inventor: Lee, Dong Ho, Soosung-Gu, Taegu (KR); Noh, Seck Kyun, Soosung-Gu, Taegu (KR)
(74) Representative: Andrews, Timothy Stephen

(56) References cited:
- EP-A- 0 293 815
- EP-A- 0 757 992
- EP-A- 0 799 838

## Description

### (Background of the Invention)

### Field of the Invention

The present invention relates to a catalyst system useful for polymerizing or copolymerizing olefins, α-olefins, cyclic olefins, diolefins, vinyl and/or styrene monomers in the slurry or gas phase with improved reactor operability; more specifically, a catalyst system comprises: i ) a metallocene having at least one ligand of unsubstituted or substituted cyclopentadienyl skeleton being linked by an anchored chain; ii) at least one carrier; and iii) an activator selected from alkylaluminoxane and alkylaluminum, wherein said carrier is linked to said metallocene by the anchored chain.

### Description of Prior Art

Regarding the catalyst composition for polymerizing or copolymerizing olefins, α-olefins, diolefins and/or cyclic olefins, several types of catalyst composition have been known, in detail, Phillips type catalysts containing chromium transition metal, free radical initiators, Ziegler-Natta catalysts containing titanium/aluminum compounds or vanadium/aluminum compounds, and metallocene/alkyl aluminoxane catalysts.

Among those catalysts, Ziegler-Natta catalysts have been regarded as an industrially useful catalyst for polymerizing olefins in the solution, slurry or gas phase. For polymerizing linear high density polyethylene, linear low density polyethylene(LLDPE) and isotactic polypropylene, the Ziegler-Natta catalysts having titanium as the main transition metal have been used. On the other hand, for the production of ethylene-propylene copolymers, ethylene-propylene-diene terpolymers and syndiotactic polypropylene, some vanadium-based catalyst systems have been used.

Recently, metallocene/alkyl aluminoxane catalysts have been developed for polymerizing or copolymerizing linear olefins, α-olefins, diolefins, cyclic olefins monomers. As shown in following formula(A), metallocene catalysts are transition metal compounds having at least one ligand of an unsubstituted or substituted cyclopentadienyl skeleton being bonded to a central transition metal atom. 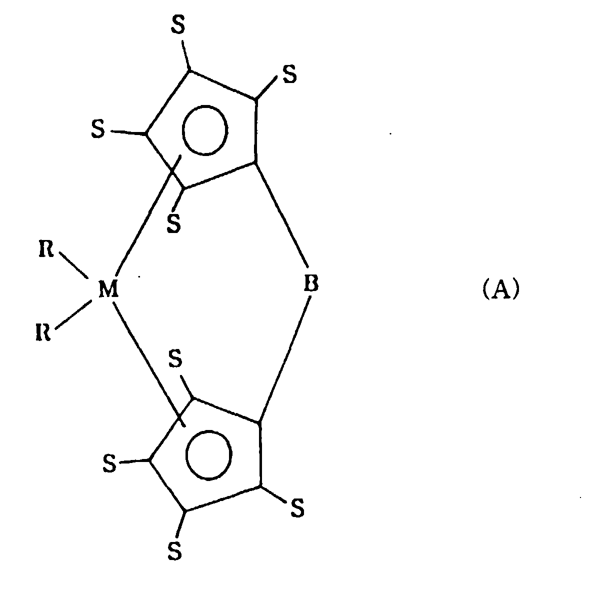 wherein
- M :: transition metal belonging to the groups of IV B, V B and VI B of Periodic Table,
- R :: alkyl, alkylidene or halogen radicals,
- S :: hydrogen or alkyl radicals, and
- B :: alkylidene or alkylene groups or heteroatom groups.

Among them, a preferable transition metal metallocene catalysts is selected from titanium, zirconium and hafnium. On the other hand, to increase the catalytic activity of metallocene significantly, a cocatalyst selected from alkylaluminoxane, cyclicalkylaluminoxane, alkylaluminum and/or a mixture of them has been required. Among those cocatalysts, methylaluminoxane(MAO) having following structural formula(B) has been considered as the most active cocatalyst. Said compounds can have a linear or cyclic structure with an average molecular weight about 1,200. MAO is a mixture of oligomers with a very wide distribution of molecular weights, and usually stored in an aromatic or aliphatic solvent, especially, toluene.

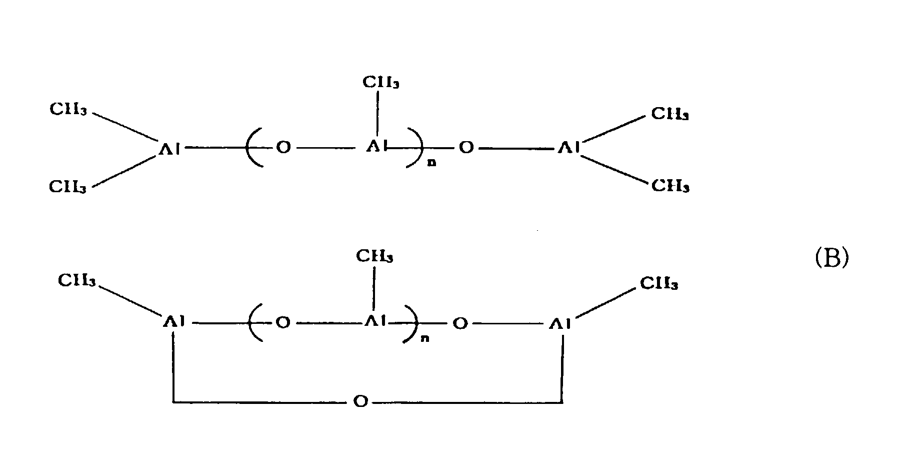

Said metallocene/alkylaluminoxane catalysts are soluble in the reaction system and, in most cases, processes for the preparation of ethylene/α-olefin copolymers are applicable to the solution polymerization system. When it is intended to prepare polymers having high molecular weight, it brings about such inconvenience that a markedly increased viscosity of the solution may reduce the productivity in the process. Further, it has a problem that it becomes difficult to obtain spherical olefin polymers having excellent particle characteristics.

Therefore, most of prior researches have been focused to prepare the polymer having a narrow composition distribution with high polymerization activity. For this purpose, metallocenes supported on porous inorganic carriers, such as, silica(EP 55 605 A1), magnesium chloride(German Patent 2,643,143 A), alumina(Belgium Patent 530617 A), magnesium fluoride, calcium fluoride, and/or mixtures of them have been disclosed. Such metallocenes supported on said carriers can be used for the gas phase and slurry polymerization. Further, the research for supporting metallocenes and alkyl aluminoxane with carriers has been also disclosed.

As an example of supporting the metallocene and methyl aluminoxane(MAO) with carriers, several techniques have been disclosed, for example: i ) Adsorption of MAO onto the support, followed by addition of the metallocene; ii) immobilization of the metallocene on the support, followed by contact with MAO in the polymerization reactor; and iii) immobilization of the metallocene on the support, followed by treatment with MAO, producing a catalyst which does not require MAO during polymerization, but requires alkylaluminums.

EP-A-0 293 815 discloses olefin polymerisation catalysts produced by reacting substituted metallocene compounds with carriers containing hydroxyl groups. The metallocene compounds include a cyclopentadienyl ligand connected to a chain, which may consist of alkyl-substituted silylene groups, alkylene groups and/or phenylene groups.

EP-A-0 757 992 (which was published after the priority date of the present application) discloses a catalyst component obtainable by contacting a metallocene compound, which may be substituted with groups selected from alkyl-substituted silylene groups, alkylene groups, and phenylene groups with an inorganic support containing hydroxy groups, optionally modified by reacting the hydroxy groups with substituted siloxane compounds.

EP-A-0 799 838 (which was published after the priority date of the present application) discloses a procatalyst for the preparation of olefin polymerisation catalysts, comprising a support and a transition metal or compound thereof attached to the support. The two components are bonded together by a silylene group, preferably substituted by a cyclopentadienyl-alkylene group.

### (Summary of the Invention)

The object of the present invention is to provide a catalyst system for polymerizing or copolymerizing olefins, α-olefins, cyclic olefins, diolefins, vinyl and/or styrene monomers in the slurry or gas phase comprising :
i) a metallocene having at least one ligand of unsubstituted or substituted cyclopentadienyl skeleton;
ii) at least one carrier consisting of porous inorganic compounds ; and
iii) an activator selected from the group consisting of alkylaluminoxane and alkylaluminum;
wherein said carrier is linked with metallocene by an anchored chain, said anchored chain being selected from the group consisting of organic siloxane compounds of formula (1), alkyl alcohol derivatives of formula (2) and alkyl derivatives of formula (3), as described in detail below

### (Detailed Description of the Invention)

The catalyst system for polymerizing or copolymerizing olefins, α-olefins, cyclic olefins, diolefins, vinyl and/or styrene monomers according to the present invention can be illustrated below in detail.

The metallocene compound having at least one ligand of unsubstituted or substituted cyclopentadienyl skeleton used in the present invention is represented by following formula

(L)ₙ M-Xₘ₋ₙ

wherein
- L: is at least one ligand selected from the group consisting of polysiloxyl, C₁∼ C₂₀ alkyl substituted or unsubstituted cyclopentadienyl, indenyl and/or fluorenyl ;
- M: is a transition metal of IV B group of Periodic Table ;
- X: is hydrogen, halogen or C₁∼C₂₀ alkyl or alkoxy ;
- m: is a valence of the transition metal; and
- n: is an integer 1 or 2.

The carrier used in the present invention includes inorganic compounds of at least one elements selected from those belonging to the groups II, III and IV of Periodic Table. The preferable carrier is at least one selected from the group consisting of silica, alumina, silica alumina, magnesium hydroxide, zirconia, titania, calcium oxide and zinc oxide. The carrier desirably has an average particle size of 5~300 µm, a specific surface area of 50~500 m²/g and a pore volume of 0.1~5.0 cc/g, and has 0.5~5.0 mmole/g of hydroxy functional group. The preferable carrier is a silica obtained from 8~12 hours calcination at 200∼650°C having an average particle diameter of 10~150 µm, a specific surface area of 50~350 m²/g, a pore volume of 0.5~3.5 cc/g and 0.5~3.0 mmole/g of hydroxy functional group.

The anchored chain by which the metallocene and the carrier are linked is selected from the group consisting of organic siloxane compounds, of formula (1), C₂-C₂₀ alkyl alcohol derivatives of formula (2) and C₂-C₂₀ alkyl derivatives of formula (3).

The detailed structure of the anchored chain of the present invention can be explained as follows.

The structural formulae of organic siloxane compounds (1), C₂∼C₂₀ alkyl alcohol derivatives (2) and C₂∼C₂₀ alkyl derivatives (3) can be represented by following formulae.

-(Cp)ₚ- (SiR₁R₂-O)ₙ-SiR₁R₂-(CP)_{q}- (1)

-(Cp)_{q}- (CH₂)ₙ-O- (2)

-(Cp)ₚ- (CH₂)ₙ -(Cp)_{q}- (3)

wherein
- Cp: is C₁∼C₆ alkyl substituted or unsubstituted cyclopentadienyl, indenyl or fluorenyl, which can exist in the form of metal salt, such as, lithium, sodium or thallium salt ;
- R₁ and R₂: are each independently C₁ to C₃ alkyl;
- n: is an integer from 2 to 20, preferably, from 4 to 15.
- p: is 0 or 1; and
- q: is 0 or 1;
provided that when the anchored chain is of formula (1) or (3), (p+q) is at least 1.

Both sides of the anchored chain are linked between the ligand of the metallocene and the surface of the carrier. Accordingly, the anchored chain has a role as an extended ligand of the metallocene, and also has a role as a functional group of the carrier.

The desirable weight portion of metallocene and carrier with which anchored chain is linked is to have following weight range : 0.1∼20 wt% of metallocene, 50∼80 wt% of carrier and 1∼30 wt% of anchored chain.

For linking the metallocene and the carrier by an anchored chain, any preparation method can be used. Two methods illustrated below are described as an example, but not to be limited to these methods.

### (Method 1)

The surface of the carrier is modified by a modifier, such as tosyl chloride or n-butyl lithium in the presence of organic solvent. The anchored chain is added and reacted with modified carrier. Finally, the anchored chain linked with said carrier is reacted and linked with metallocene.

### (Method 2)

The metallocene is reacted and linked with anchored chain. Then, the metallocene having the anchored chain is reacted and linked with the modified carrier in the presence of organic solvent.

The organic solvent used in the course of said reaction is selected from the group consisting of tetrahydrofuran, ethyl ether, pentane, hexane, heptane and toluene. Also, nitrogen gas can be used as an inert gas in the reactor.

Alkylaluminoxane or alkylaluminum, such as, trimethylaluminum, triethylaluminum, triisobutylaluminum etc, has to be used as an activator for polymerizing or copolymerizing olefins, α-olefins, cyclic olefins, diolefins, vinyl and/or styrene monomers. The desirable activators are methylaluminoxane (MAO) and triisobutylaluminum. The molar ratio of aluminum of activator per transition metal of metallocene(Al/M) is 50∼5,000, preferably, 100∼2,000.

Followings are methods for measuring the analysis of catalyst composition, catalytic activity, melting point and crystallinity of polymer, molecular weight, molecular weight distribution, melt index(M.I.) and density.

### (1) Analysis of catalyst composition

The content of anchored chain was measured by Elemental Analyzer, and the chemical structure of the anchored chain was confirmed by solid-phase NMR. The transition metal content of catalyst was measured using a Inductively Coupled Plasma Spectrophotometer after decomposing the catalyst by nitric acid.

### (2) Catalytic activity

The catalytic activity was measured by measuring the weight of obtained polyethylene or monitoring the monomer · flow rate with MFC(Mass Flow Meter). The unit of activity is Kg-PE/Mole · Metal · hour.

### (3) Melting point and crystallinity

Using Differential Scanning Calorimetry (DSC) the melting point and crystallization temperature were measured under inert gas atmosphere, according to the method of ASTM (American Society for Testing and Materials) D-2117.

### (4) Molecular weight and molecular weight distribution

The weight average molecular weight (Mw) and molecular weight distribution (Mw/Mn) were measured by Gel Permeation Chromatography (Waters Co.) at 140°C using the polymer solution.

### (5) Melt index and density

Melt index and density were measured, according to the methods of ASTM D-1238 and ASTM D-1505 respectively.

The present invention can be described in more detail by following examples, but the scope of this invention is not limited to these examples.

### (Example 1)

### (1) Preparation of silica support-anchored catalyst

The catalyst was prepared in a glass reactor with temperature controller, magnetic stirrer under a nitrogen environment. In a nitrogen purged reactor, 100ml of purified tetrahydrofuran (THF) and 2g of silica (Davision, grade No. 952) which was calcinated at 600°C for 10 hours were added, and reacted with 4 x 10⁻³ M of 6-chloro-1-hexanol(CHO) at 50°C for 15 hours. The resulted solid was washed with tetrahydrofuran and 4 x 10⁻³ M of metallocene (Cp₂ZrCl₂) was added and reacted at 50°C for 15 hours. Finally, silica support-anchored catalyst (SiO₂/CHO/Cp₂ZrCl₂) was obtained.

### (2) Ethylene polymerization

The polymerization was carried out in a 400ml glass reactor with a temperature controller, magnetic stirrer and valve. In a nitrogen purged reactor, 100ml of purified toluene and a small amount of methylaluminoxane were added to the reactor. The mixture was fully stirred at 40°C and saturated with ethylene at 1 atm. Upon flowing ethylene continuously, each amount of silica support-anchored catalyst was added having a mole ratio [Al]/[Zr] = 1000, 500, 200, and the polymerization was carried out at 40°C, 1 atm for 2 hours. Thereafter, a small amount of ethanol was added, and the polymerization was finished. Then hydrochloric acid-methanol was added and stirred to precipitate the polymer. Finally, an amount of polyethylene was obtained after washing with water and methanol and vacuum-drying at 60°C.

The Table 1 showed the catalytic activity, weight average molecular weight (Mw), molecular weight distribution (Mw/Mn) and melting point (Tm) according to the variation of mole ratio [Al]/[Zr] = 1000, 500, 200 using the catalyst prepared in this example.

### (Example 2)

### (1) Preparation of silica support-anchored catalyst

A nitrogen purged glass reactor was charged with 2g of silica used in example 1 and 100ml of THF to obtain a suspension, and 4 x 10⁻³ M of tosyl chloride was added and reacted with silica for 2 hours at room temperature. The modified silica by tosylate was obtained. In another reactor, 8 x 10⁻³ M of cyclopentadienyl sodium salt and 4 x 10⁻³ M of 1,5-dichlorohexamethyl trisiloxane were reacted at -80°C. Then, the mixture was stirred for 15 hours at room temperature, and salt was removed. 8 x 10⁻³ M of thallium ethoxide (TlOEt) was added and reacted for 2 hours at room temperature. Thereafter, metallocene connected with trisiloxane was prepared after reacting above reaction solution and 4 x 10⁻³ M of indenyl zirconium trichloride for 2 hours at room temperature. Finally, silica support-anchored catalyst (SiO₂/Cp-Si-O-Si-O-Si-Cp-IndZrCl₂) was obtained after reacting the said metallocene having siloxane anchored chain with the modified silica by tosylate at 50°C for 15 hours and washing the obtained catalyst with toluene.

### (2) Ethylene polymerization

The polymerization was carried out under conditions as stated for example 1 except that the catalyst prepared in this example was used and the mole ratio of [Al]/[Zr] was adjusted to 5000, 1000, 500. Table 1 showed the catalytic activity, weight average molecular weight (Mw), molecular weight distribution (Mw/Mn) and melting point (Tm) of the polymer in this example.

### (Example 3)

### (1) Preparation of silica support-anchored catalyst

The catalyst was prepared in a glass reactor with temperature controller, magnetic stirrer and valve. A nitrogen purged reactor was charged with 100ml of purified tetrahydrofuran (THF) and 2g of silica used in example 1 to obtain a suspension, and 4 x 10⁻³ M of n-butyl lithium was added and reacted with silica for 15 hours at 50°C. The modified silica by n-butyl lithium was reacted with 4 x 10⁻³ M of 1,5 -dichlorohexamethyl trisiloxane at 70°C for 15 hours. The obtained product was washed with THF and 4 x 10⁻³ M of cyclopentadienyl sodium salt were reacted for at -80°C for 2 hours, followed by reacting again 12 hours at room temperature. Then, n-butyl lithium was added and reacted, and 4 x 10⁻³ M of indenyl zirconium trichloride was added and reacted for 2 hours at room temperature. Finally, silica support-anchored catalyst (SiO₂/O-Si-O-Si-O-Si-Cp-IndZrCl₂) was obtained after washing the resulted catalyst with toluene.

### (2) Ethylene polymerization

The polymerization was carried out under conditions as stated for example 1 except that the catalyst prepared in this example was used and the mole ratio of [Al]/[Zr] was adjusted to 5000. Table 1 showed the catalytic activity, weight average molecular weight (Mw), molecular weight distribution (Mw/Mn) and melting point (Tm) of the polymer in this example.

### (Example 4)

### (1) Preparation of silica support-anchored catalyst

The catalyst was prepared in the same manner as example 3 except that 4 x 10⁻³ M of 1,5-dichloropentane was used instead of 4 x 10⁻³ M of 1,5-dichlorohexamethyl trisiloxane. Finally, silica support-anchored catalyst (SiO₂/O-(CH₂)₅-Cp-IndZrCl₂) was obtained

### (2) Ethylene polymerization

The polymerization was carried out under conditions as stated for example 1 except that the catalyst prepared in this example was used and the mole ratio of [Al]/[Zr] was adjusted to 5000. Table 1 showed the catalytic activity, weight average molecular weight (Mw), molecular weight distribution (Mw/Mn) and melting point (Tm) of the polymer in this example.

### (Example 5)

### (1) Preparation of silica support-anchored catalyst

The catalyst was prepared using the same method as for example 2 except that 4 x 10⁻³ M of 1,5-dichloropentane was used instead of 4 x 10⁻³ M of 1,5-dichlorohexamethyl trisiloxane. Finally, silica support-anchored catalyst (SiO₂/Cp-(CH₂)₅-Cp-IndZrCl₂) was obtained.

### (2) Ethylene polymerization

The polymerization was carried out under conditions as stated for example 1 except that the catalyst prepared in this example was used and the mole ratio of [Al]/[Zr] was adjusted to 5000, 2000, 1000, and that the polymerization was carried out at 40°C and 70°C at 1 atm. Table 1 showed the catalytic activity, weight average molecular weight (Mw), molecular weight distribution (Mw/Mn) and melting point (Tm) of the polymer in this example.

### (Example 6)

### (1) Preparation of silica support-anchored catalyst

The catalyst was prepared in the same manner as example 2 except that 4 x 10⁻³ M of 1,9-dichlorononane was used instead of 4 x 10⁻³ M of 1,5-dichlorohexamethyl trisiloxane. Finally, silica support-anchored catalyst (SiO₂/Cp-(CH₂)₉-Cp-IndZrCl₂) was obtained

### (2) Ethylene polymerization

The polymerization was carried out in a 400ml glass reactor with a temperature controller, magnetic stirrer and valve. In a nitrogen purged reactor, 100ml of purified toluene and an amount of methyl aluminoxane were added. The mixture was fully stirred at 70°C and saturated with ethylene at 1 atm. Upon flowing ethylene continuously, each amount of silica support-anchored catalyst prepared in this example was added having a mole ratio [Al]/[Zr] = 5000, and the polymerization was carried out at 70°C, 1 atm for 2 hours. Thereafter, a small amount of ethanol was added, and the polymerization was finished. The hydrochloric acid-methanol was added and stirred to precipitate the polymer. Finally, an amount of polyethylene was obtained after washing with water and methanol and vacuum-drying at 60°C

The Table 1 showed the catalytic activity, weight average molecular weight (Mw), molecular weight distribution (Mw/Mn) and melting point (Tm) of the polymer in this example.

### (Example 7)

### (1) Preparation of silica support-anchored catalyst with methylaluminoxane (MAO)

20ml of toluene was added to silica support-anchored catalyst (SiO₂/Cp-(CH₂)₉-Cp-IndZrCl₂) in example 6 to make a slurry. Then, 18ml of MAO(Akzo, grade : MMAO-4, 6.4 wt% Al) was added to the slurry at room temperature([Al]/[Zr] = 400), and the mixture was stirred at 80°C for 12 hours. The obtained solid slurry was filtered and washed with 40ml of toluene 8 times. Finally, silica support-anchored catalyst with methylaluminoxane(MAO) was obtained after vacuum dry in room temperature.

### (2) Ethylene polymerization

In a nitrogen and ethylene purged 1 L-stainless autoclave, 400ml of isobutane and 2mM of triisobutylaluminium were added and stirred. Then, the solid catalyst containing 0.007mM of zirconium prepared in this example and 100ml of isobutane were prepolymerized at 50°C, 17 atm for 2 hours, and the polymerization was carried out at 75°C, 25 atm for 1 hour. The product was easily removed from the reactor and showed little signs of reactor fouling. The properties of the obtained polymer were shown in Table 1. Further data are as follows : melt index 0.05 g/10min, density 0.95 g/cm³ and crystallinity 58.6%.

### (Example 8) Copolymerization of ethylene/1-hexene

In a nitrogen and ethylene purged 1 L-stainless autoclave, 400ml of isobutane and 2mM of triisobutylaluminium(1M hexane solution) were added and stirred at 35°C. Then, the solid catalyst containing 0.007mM of zirconium prepared in example 7 and 100ml of isobutane were prepolymerized at 35°C, 13.6 atm for 2 hours. Then, 0.16 M of 1-hexene was added to the reactor, and the polymerization was carried out at 75°C, 29.3 atm for 1 hour. The product was easily removed from the reactor and showed little signs of reactor fouling. The properties of the obtained polymer were shown in Table 1. Further data are as follows : melt index 0.11 g/10min, density 0.942 g/cm³ and crystallinity 52.1%.

### (Example 9) Copolymerization of ethylene/1-hexene

In a nitrogen and ethylene purged 1 L-stainless autoclave, 400ml of isobutane and 2mM of triisobutylaluminium(1M hexane solution) were added and stirred at 35°C. Then, the solid catalyst containing 0.007mM of zirconium prepared in example 7 and 100ml of isobutane and 0.16M of 1-hexene were added to the reactor, and the polymerization was carried out at 80°C, 29.3 atm for 1 hour. The product was easily removed from the reactor and showed little signs of reactor fouling. The properties of obtained polymer were shown in Table 1. Further data are as follows : melt index 0.54 g/10min, density 0.942 g/cm³ and crystallinity 50.6%.

### (Example 10) Copolymerization of ethylene/1-butene

In a nitrogen and ethylene purged 1 L-stainless autoclave, 400ml of isobutane and 2mM of triisobutylaluminium(1M hexane solution) were added and stirred at 35°C. Then, the solid catalyst containing 0.007mM of zirconium prepared in example 7 and 100ml of isobutane and 0.424M of 1-butene were added to the reactor with continuous flow of hydrogen in the velocity of 0.67 ml/min, and the polymerization was carried out at 80°C, 29.3 atm for 1 hour. The product was easily removed from the reactor and showed little signs of reactor fouling. The properties of obtained polymer were shown in Table 1. Further data are as follows : melt index 2.67 g/10min, density 0.929 g/cm³ and crystallinity 34.2%.

### (Comparative Example)

### (1) Preparation of silica support-anchored catalyst

The catalyst was prepared in a glass reactor with a temperature controller, magnetic stirrer and valve. In a nitrogen purged reactor, 100ml of purified toluene and 2g of silica (Davision, grade No. 952) which was calcinated at 600 °C for 10 hours were added. 4 x 10⁻³ M of metallocene (Cp₂ZrCl₂) was added and reacted at 50°C for 15 hours. Finally, silica support catalyst (SiO₂/Cp₂ZrCl₂) was obtained.

### (2) Ethylene polymerization

The polymerization was carried out under conditions as stated for example 1 except that the catalyst prepared in this example was used with MAO and the mole ratio of [Al]/[Zr] was adjusted to 1000, 500. Table 1 shows the catalytic activity, weight average molecular weight (Mw), molecular weight distribution (Mw/Mn) and melting point (Tm) of the polymer in this example.

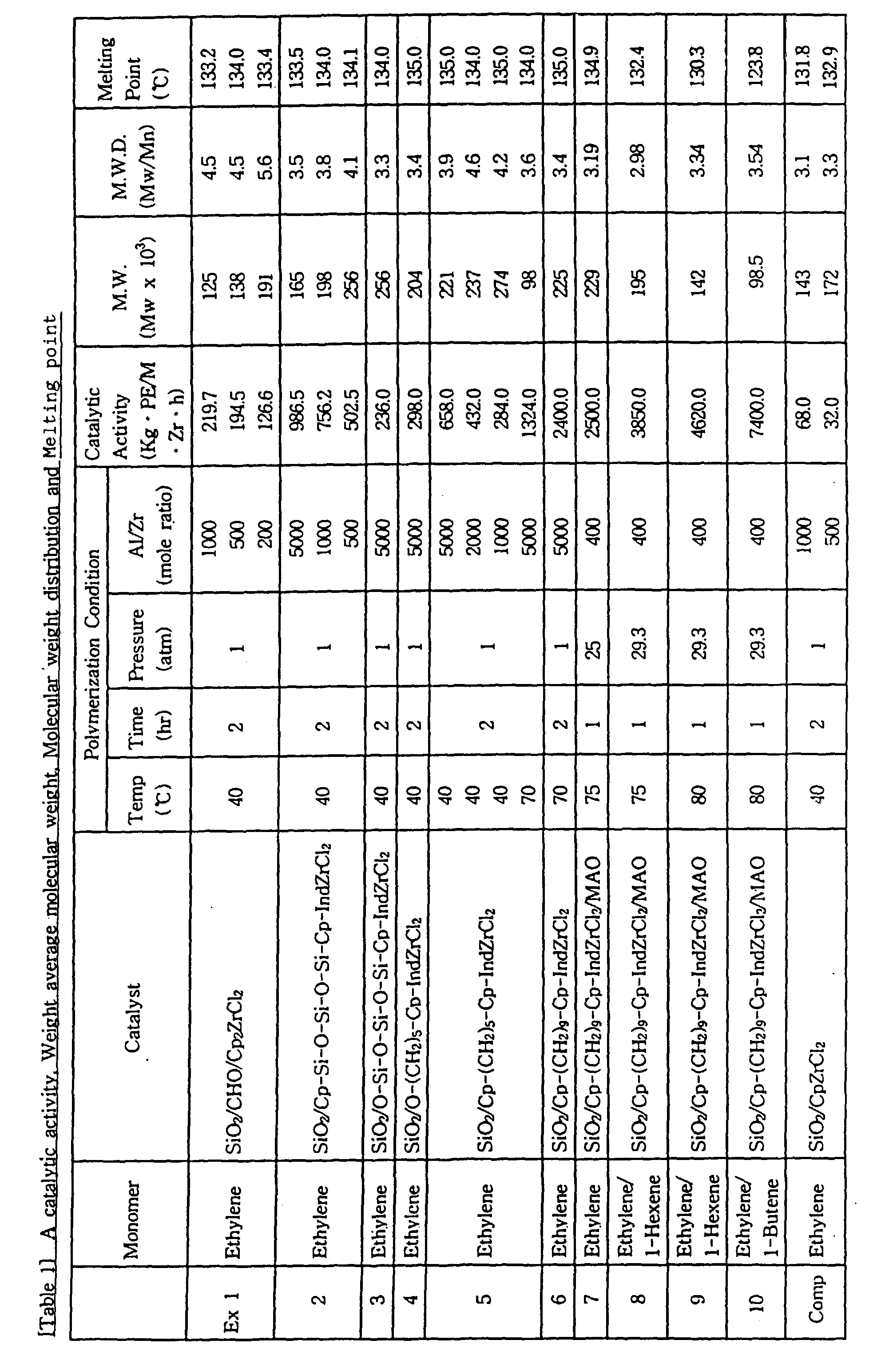

## Claims

1. A catalyst system for polymerizing or copolymerizing olefins, α-olefins, cyclic olefins, diolefins, vinyl and/or styrene monomers in the slurry or gas phase comprising :
i ) a metallocene having at least one ligand of unsubstituted or substituted cyclopentadienyl skeleton;
ii) at least one carrier consisting of porous inorganic compounds ; and
iii) an activator selected from the group consisting of alkyl aluminoxane and alkylaluminum
wherein said carrier is linked to said metallocene by an anchored chain which is selected from the group consisting of organic siloxane compounds(1), alkyl alcohol derivatives(2) and alkyl derivatives(3) represented by the following formulae :
-(Cp)ₚ- (SiR₁R₂-O)ₙ-SiR₁R₂ -(Cp)_{q}- (1)
-(Cp)ₚ- (CH₂)ₙ-O- (2)
-(Cp)ₚ- (CH₂)ₙ -(Cp)_{q}- (3)
wherein :
Cp is C₁∼C₆ alkyl substituted or unsubstituted cyclopentadienyl, indenyl or fluorenyl, which can exist in the form of metal salt ;
R₁ and R₂ are each independently C₁ to C₃ alkyl;
n is an integer from 2 to 20;
p is 0 or 1; and
q is 0 or 1;
provided that when the anchored chain is of formula (1) or (3), (p+q) is at least 1.

2. The catalyst system according to claim 1, wherein said carrier is at least one selected from the group consisting of silica, alumina, silica alumina magnesium hydroxide, zirconia, titania, calcium oxide and zinc oxide.

3. The catalyst system according to claim 2, wherein said carrier is a silica having an average particle size of 5~300 µm, a specific surface area of 50∼ 500 m²/g and a pore volume of 0.1-5.0 cc/g, and 0.5~5.0 mmole/g of hydroxy functional group.

4. The catalyst system according to claim 1, wherein said activators are selected from the group consisting of methylaluminoxane(MAO) and triisobutylaluminum.

5. The catalyst system according to claim 1, wherein the molar ratio of aluminium in the activator per transition metal in the metallocene(Al/M) is 50∼5,000.

## Patentansprüche

1. Katalysatorsystem zur Polymerisierung oder Copolymerisierung von Olefinen, α-Olefinen, zyklischen Olefinen, Diolefinen, Vinyl- und/oder Styrolmonomeren in der Schlammphase oder in der Gasphase, System welches folgendes aufweist:
i) ein Metallocen, das mindestens einen Liganden eines unsubstituierten oder substituierten Cyclopentadiengerüstes besitzt;
ii) mindestens einen Träger, der aus porösen anorganischen Verbindungen besteht; und
iii) einen Aktivator, der aus der Gruppe ausgewählt wird, die aus Alkylaluminoxan und Alkylaluminium besteht,
wobei der Träger mit dem Metallocen verbunden ist über eine verankerte Kette, die aus der Gruppe ausgewählt wird, die aus organischen Siloxanverbindungen (1), Alkylalkoholderivaten (2) und Alkylderivaten (3) besteht, welche durch die folgenden Formeln dargestellt werden:
-(Cp)ₚ-(SiR₁R₂-O)ₙ-SiR₁R₂-(Cp)_{q}- (1)
-(Cp)ₚ-(CH₂)ₙ-O- (2)
-(Cp)ₚ-(CH₂)ₙ-(Cp)_{q}- (3)
in welchen:
Cp ein C₁-C₆ alkylsubstituiertes oder unsubstituiertes Cyclopentadienyl, Indenyl oder Fluorenyl ist, das in der Form eines Metallsalzes existieren kann;
R₁ und R₂ jeweils unabhängig voneinander für ein C₁- bis C₃-Alkyl stehen;
n eine ganze Zah 1 von 2 bis 20 ist;
p gleich 0 oder 1 ist; und
q gleich 0 oder 1 ist;
mit der Bedingung, dass, wenn die verankerte Kette der Formel (1) oder (3) entspricht, dann (p+q) mindestens 1 beträgt.

2. Katalysatorsystem gemäß Anspruch 1, in dem der Träger mindestens einer Verbindung entspricht, die aus der Gruppe ausgewählt wird, die aus Silika, Aluminiumoxid, Silika-Aluminiumoxid-Magnesiumhydroxyd, Zirkonoxid, Titanoxid, Kalziumoxid und Zinkoxid besteht.

3. Katalysatorsystem gemäß Anspruch 2, in dem der Träger ein Silika ist, das eine durchschnittliche Partikelgröße von 5-300 µm, eine spezifische Oberflächenausdehnung von 50-500 m²/g und ein Porenvolumen von 0,1-5,0 cm³/g, sowie 0,5-5,0 mmol/g einer hydroxyfunktionellen Gruppe besitzt.

4. Katalysatorsystem gemäß Anspruch 1, in dem die Aktivatoren ausgewählt werden aus der Gruppe, die aus Methylaluminoxan (MAO) und Triisobutylaluminium besteht.

5. Katalysatorsystem gemäß Anspruch 1, in dem das molare Verhältnis des Aluminiums in dem Aktivator zu dem Übergangsmetall in dem Metallocen (Al/M) 50-5.000 beträgt.

## Revendications

1. Système catalytique pour la polymérisation ou la copolymérisation de monomères d'oléfines, d'α-oléfines, d'oléfines cycliques, de dioléfines, de vinyle et/ou de styrène en suspension ou en phase gazeuse comprenant:
i) un métallocène contenant au moins un ligand avec un squelette de cyclopentadiényle non substitué ou substitué;
ii) au moins un support constitué de composés inorganiques poreux; et
iii) un activateur choisi dans le groupe constitué d'un aluminoxane d'alkyle et d'un aluminium d'alkyle,
dans lequel ledit support est lié audit métallocène par une chaîne ancrée qui est choisie dans le groupe constitué de composés de siloxanes organiques (1), de dérivés d'alcool d'alkyle (2) et de dérivés d'alkyle (3) représentés par les formules suivantes:
-(Cp)ₚ-(SiR₁R₂-O)ₙ-SiR₁R₂-(Cp)_{q}- (1)
-(Cp)ₚ-(CH₂)ₙ-O- (2)
-(Cp)ₚ-(CH₂)ₙ-(Cp)_{q}- (3)
dans lesquelles:
Cp représente un groupe cyclopentadiényle, indényle ou fluorényle non substitué ou substitué par un groupe alkyle C₁-C₆, qui peut exister sous la forme d'un sel métallique;
R₁ et R₂ sont chacun indépendamment un groupe alkyle C₁ à C₃;
n est un nombre entier de 2 à 20;
p est 0 ou 1; et
q est 0 ou 1;
sous réserve que lorsque la chaîne ancrée est de formule (1) ou (3), (p+q) est au moins égal à 1.

2. Système catalytique suivant la revendication 1, dans lequel ledit support est au moins un composé choisi dans le groupe constitué de silice, d'alumine, de silice alumine, d'hydroxyde de magnésium, de zircone, de dioxyde de titane, d'oxyde de calcium et d'oxyde de zinc.

3. Système catalytique suivant la revendication 2, dans lequel ledit support est une silice présentant une taille de particules moyenne de 5-300 µm, une surface spécifique de 50-500 m²/g et un volume de pores de 0,1-5,0 cc/g et 0,5-5,0 mmoles/g de groupes fonctionnels hydroxyles.

4. Système catalytique suivant la revendication 1, dans lequel lesdits activateurs sont choisis dans le groupe constitué d'aluminosiloxane de méthyle (MAO) et de triisobutylaluminium.

5. Système catalytique suivant la revendication 1, dans lequel le rapport molaire de l'aluminium dans l'activateur par métal de transition dans le métallocène (Al/M) est de 50-5.000.
